# EUROPEAN PATENT SPECIFICATION

(11) **EP 3 615 175 B1**
(45) Date of publication and mention of the grant of the patent: **13.08.2025**
(21) Application number: 18725762.1
(22) Date of filing: 26.04.2018
(51) Int. Cl.: B01D 46/00, B01D 46/24

(54) **FILTER SYSTEM**
FILTERSYSTEM
SYSTÈME FILTRANT

(30) Priority: 28.04.2017 EP 17168608
(43) Date of publication of application: 04.03.2020
(73) Proprietor: Leybold GmbH, 50968 Köln (DE)
(72) Inventor: MOULIN, Christian, 26800 Portes-lès-Valence (FR)
(74) Representative: Arnold, Emily Anne
(86) International application number: PCT/EP2018/060736
(87) International publication number: WO 2018/197614

(56) References cited:
- EP-A1- 2 703 056
- DE-A1- 10 052 524
- DE-A1- 10 052 524
- DE-A1- 19 951 085
- DE-U1- 202006 005 012
- DE-U1- 202006 011 990
- US-A1- 2004 164 017
- US-A1- 2014 263 099

## Description

The invention relates to a filter system for vacuum pumps. In particular, the filter system is a filter system for oil-sealed vacuum pumps, the filter system being particularly suited for rotary vane pumps.

With rotary vane pumps, and possibly also with other oil vacuum pumps, it is necessary to filter a mixture of lubricant and gas, which in particular is an oil-air mixture that is produced as the gaseous medium is pumped. Using suitable filter systems, the lubricant is returned into the lubrication system and the remaining clean gas is ejected. The filter elements of such filter systems have to be replaced at regular intervals. With known filter systems, replacing the filter elements is complicated. Specifically, some components connected to the filter element often have to be dismantled. These components are then again necessary for fitting and mounting the new filter. On the one hand, this is complicated and, on the other hand, this is often accompanied by soiling, since components have to be dismantled that are covered with lubricant.

Further, it is a frequent problem that the filter can be installed in a wrong position.

This may result in a compromised filtering performance or even in a complete absence of a filtering effect.

It is an object of the invention to provide a filter system for vacuum pumps, in particular for oil-sealed vacuum pumps, whose filter element is simple to replace.

DE 10 052 524 A1 describes a filter system having a filter element with a specific inlet design to define a specific position relative to a filter housing head. US 2004/164017 A1 show a fuel filter system for a vehicle fuel system, which describes further state of the art for the present invention.

These objects are solved according to the invention with a filter system of claim 1.

The filter system which is suited in particular for vacuum pumps and, as particularly preferred, for oil-sealed vacuum pumps such as rotary vane pumps, comprises a filter element accommodated in a filter housing. The filter element serves to filter lubricant, such as oil, from a lubricant-gas mixture which in particular is a lubricant-air mixture. The filter element has a filter inlet element through which the lubricant-gas mixture flows into the filter element. The filter inlet element is accommodated in a housing inlet of the filter housing when, in operation, the filter element is installed in the filter housing. Further, the filter element has a retaining element in the region of a filter outlet element, i.e. in the region in which the gas flows out of the filter element. In the mounted state of the filter element, the retaining element cooperates with a receiving element provided in the filter housing. Preferably, the filter element has a generally cylindrical or conic shape, whereby the base of the cylinder or conic shape can, for example, be a circle, an oval, a rectangle, an ellipse or a polygon, etc. Furthermore, the filter outlet element and/or the filter inlet element are arranged on an axial end of the filter element. In a particular the filter outlet element is arranged on one axial end of the filter element and the filter inlet element is arranged on the other axial end of the filter element. Preferably, the filter housing has substantially the shape of a hollow cylinder or a hollow cone. Again, the base of the hollow cylinder or hollow cone can correlate, for example, to a circle, an oval, a rectangle, an ellipse or a polygon, etc.

In order to guarantee a defined position and thus a good adjustment of the filter element in the filter housing, the filter inlet element and the housing inlet of a first preferred embodiment are designed such that, for adjustment purposes, the filter inlet element can be received by the housing inlet only in a single position. In an alternative embodiment the retaining element of the filter element and the receiving element at the filter housing are designed such that, for adjustment purposes, the retaining element can be received by the receiving element only in a single position. In a preferred embodiment, these two possibilities are combined for a unique adjustment. By providing at least one such adjustment, it is guaranteed that the filter element can be arranged in the filter housing only in a defined position. This is of importance in particular if the filter element e.g. has different filter regions whose position is important for a reliable functioning of the filter element. For example, the filter element may also comprise a drip edge which, in the mounted state, must be directed downward.

In a preferred embodiment, the filter inlet element and the housing inlet, which are preferably designed to be complementary to each other, are configured such that they have a non-round cross section. For example, an otherwise round cross section has a flattening, an indentation or a bulge or the like. Thereby, the filter element of a corresponding design can be inserted into the housing inlet only in a defined position. For this purpose, it is possible to provide e.g. a tab, in particular a radially arranged tab, or a nose on one of the two components. The tab will then engage into a corresponding recess. In particular when the filter inlet element has a tab protruding radially outward, the filter insert can have a round opening, seen in cross section, so that the flow is not compromised by the opening cross section.

The retaining element has two wing-shaped tabs. In the mounted state, these tabs are inserted into slot-shaped recesses of the receiving element of the filter housing. The wing-shaped tabs again may serve for adjustment in only one possible position, but have the additional advantage that the filter element can be gripped well and can thus be handled well. Inserting the filter element into the filter housing can be accomplished in particular by gripping the filter elements by the two, preferably wing-shaped tabs. In a particularly preferred embodiment the wing-shaped tabs are not arranged opposite each other, i.e. not under an angle of 180° with respect to each other, so that the filter element can only be inserted in a defined position, if only for the angle between the two wing-shaped tabs. Similarly, the wing-shaped tabs may themselves have tabs, noses, grooves or the like that cooperate with correspondingly matching nose protrusions and indentations of the receiving element so that a unique positional definition is provided thereby as well.

The filter system for vacuum pumps is constructed such, that insertion of the filter element into the filter housing is achieved by an axially insertion, in view of the filter element, into the filter housing. In other words, the filter system for vacuum pumps is designed such, that the filter element can be inserted into the filter housing via an axial, sliding, movement. It is preferred that this insertion is achieved by axially inserting the filter element into the filter housing, whereby the filter element and the filter housing are arranged axially to each other, for example if the filter housing and the filter element have a conic and/or cylindrical shape. The connection and/or sealing of the filter inlet element and the filter housing inlet is preferably achieved by axial contact pressure of the filter element relative to the filter housing. Thus, for example no radial movement and/or threading of the filter element relative to the filter housing is needed.

In a further preferred embodiment the filter inlet element has an annular shoulder, seen in cross section, for receiving an in particular annular sealing element such as an O-ring. Thereby, it is possible to use a conventional sealing element, since the sealing element does not have to be adapted to a possibly non-round filter inlet element.

In another preferred embodiment the filter system has a tensioning element. This may be in particular a spring, especially a helical spring. The tensioning element is preferably arranged in the region of the filter outlet element in which the filtered gas escapes from the filter element. By providing such a tensioning element it is possible to exert a retaining force on the mounted filter element or during the mounting of the filter element. Again, the unique definition of the position of the filter element in the filter housing is further enhanced thereby. Specifically, a compression force can be exerted on the sealing element by the tensioning element, so that a reliable sealing is guaranteed.

It is further preferred that the filter housing has an insertion opening for inserting the filter element. The insertion opening is preferably closed with a housing cover. In a particularly preferred development of the invention, the housing cover is fixed on the filter housing by a fixing element, in particular a plurality of screws. Here, it is preferred that the fixing of the housing cover causes the tensioning of the tensioning element or the generation of a retaining force by the tensioning element. For example, the housing cover is drawn to an outer wall of the filter housing by the fixing element, such as the plurality of screws. Here, the tensioning element is supported indirectly or directly on an inner side of the housing cover and is then compressed e.g. by tightening the screws or providing the fixing elements.

The filter element preferably is substantially cylindrical in cross section, it being preferred that a drip edge is provided at a bottom side on the outer side of the filter element, which drip edge extends in particular over the entire length of the filter element. The drip edge has to be directed downward in the mounted state. With a filter element of substantially cylindrical design, it is further preferred that the filter inlet element is arranged substantially opposite the filter outlet element.

A pressure relief valve is preferably provided in the flow direction, in particular upstream of the filter outlet element. The valve serves to prevent a buildup of excess overpressure in the filter element, e.g. in case of a clogged filter element.

In a further particularly preferred embodiment the filter housing has at least one guiding element on an inner side directed towards the filter element. The guiding element is provided in particular in the region of the housing inlet. When the filter element is inserted into the filter housing, the guiding element serves to adjust the filter inlet element so that a simple insertion of the filter inlet element into the housing inlet is possible. It is particularly preferred that two guiding elements are provided that extend in the longitudinal direction, i.e. in the direction of insertion of the filter element. These are spaced from a center plane so that the two guiding elements not only guarantee a horizontal, but also a vertical guiding of the filter element.

A method, which is not claimed, of providing a filter system for vacuum pumps is in particular a method of providing a filter system for vacuum pumps as described above. The method comprises the step of providing a filter housing, whereby the filter housing has a housing inlet and a receiving element. A further step of the method is to provide a filter element for filtering out lubricant from a lubricant-gas mixture. Said filter element has a filter inlet element, a filter outlet element and a retaining element. Preferably, the filter inlet element and the housing inlet are designed such that, for adjustment, the filter inlet element can be received by the housing inlet in only one position. Alte The retaining element and the receiving element are designed such that, for adjustment, the retaining element can be received by the receiving element in only a specific position. A subsequent step of the method is to insert the filter element into the filter housing. It is preferred that the insertion is achieved by axially insertion, in particular in a sliding movement, of the filter element into the filter housing.

Furthermore, the method preferably comprises the step of attaching a tensioning element to the filter system for vacuum pumps for generating a retaining force. In particular, the retaining force acts on a sealing element arranged between the filter element and the filter housing, which provides sealing between the filter element and the filter housing. It is preferred that the tensioning element is attached between the filter housing and the filter element or between a housing cover and the filter element, such that the tensioning element provides a retaining force between the filter element and the filter housing.

A preferred further step of the method is to attach a housing cover to the filter housing in order to enclose and/or retain the filter element in the housing. This attachment is in particular achieved by screwing the housing cover on an open end of the filter housing.

The method of replacing a filter element in a filter system for vacuum pumps, in particular a filter system for vacuum pumps as describe above, comprises the step of removing, in particular axially pulling out, a used filter element from a housing of the filter system for vacuum pumps. Afterwards, a new filter element is inserted, preferably axially, into the filter housing.

The method of replacing a filter element in a filter system for vacuum pumps also comprises a step of detaching, in particular unscrewing, a housing cover from the filter housing, before removing the used filter element.

Preferably, the method of replacing a filter element in a filter system for vacuum further comprise the step of attaching a tensioning element as defined in the method of providing a filter system for vacuum pumps and/or the step of attaching a housing cover as defined in the method of providing a filter system for vacuum pumps.

The invention will be described hereunder in detail with reference to a preferred embodiment and to the accompanying drawings.

In the Figures:
- Fig. 1: is a schematic sectional view of a filter system in the mounted state.
- Fig. 2a: is a schematic sectional view along line II-II in Fig. 1.
- Fig. 2b: is an alternative embodiment of the sectional view of the filter element in Fig. 2a.
- Fig. 3: is a schematic sectional view along line III-III in Fig. 1.
- Fig. 4: is a schematic perspective view of the filter element.
- Fig. 5: is a schematic front view of the filter system in the direction of the arrow V in Fig. 1 without housing cover.
- Fig. 6: is a schematic sectional view of the filter system during assembly.

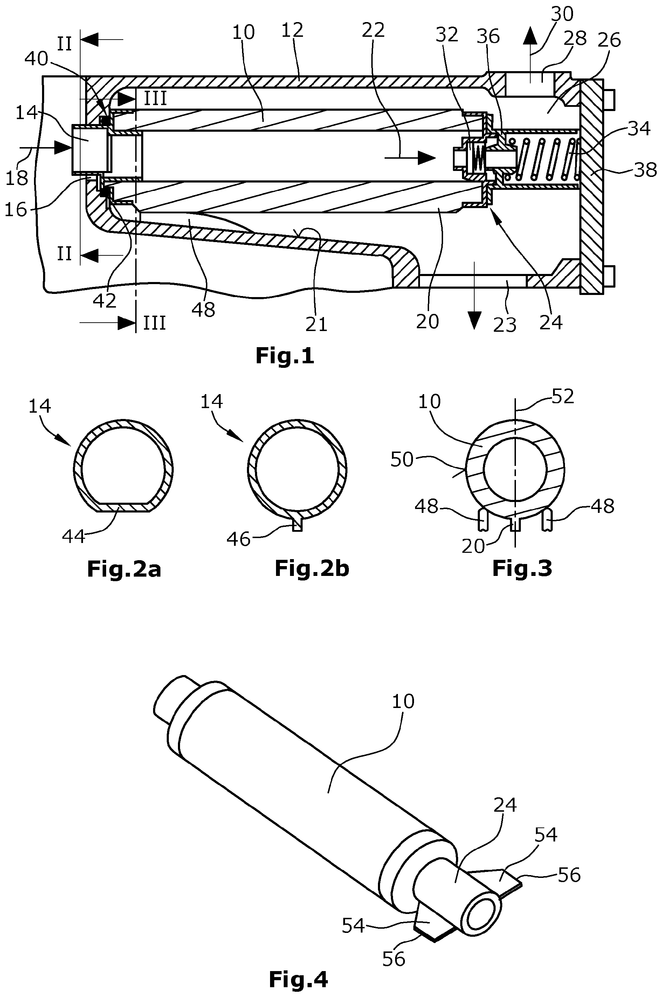

The filter system of the present invention (Figure 1) comprises a filter element 10 arranged in a filter housing 12. In the mounted state, a filter inlet element 14 connected to the filter element is arranged in a housing inlet 16 of the filter housing 12. A mixture of lubricant and gas thus flows in the direction of an arrow 18 through the filter inlet element 14 into the filter element 10. The lubricant filtered out exits radially at the circumference of the in particular cylindrical filter element 10. Due to gravity, the lubricant flows downward on the outer side of the filter element 10 and drips from the outer side of the filter element. For this purpose, a drip edge 20 is provided at the lower side of the filter element 10, which drip edge extends substantially along the entire longitudinal direction of the filter element 10.

The lubricant dripping down from the drip edge 20 hits an inclined upper side 21 and then flows through an opening 23 back into the pump generator by difference of pressure (lower pressure in the generator).

The remaining gas flows in the direction of an arrow 22 and through the filter element 10, into a cavity 26 between the filter element 10 and the filter housing 12 and then escapes through a housing outlet 28 of the filter housing 12 in the direction of an arrow 30. A schematically illustrated pressure relief valve 32 is provided in the filter outlet element 24. This valve 32 opens when the filter is clogged and must be changed. Further, in the embodiment illustrated, a tensioning element 34 in the form of a helical spring is arranged inside the filter outlet element 24 having a cylindrical outer circumference. The helical spring 34 is supported at one end at an intermediate wall 36 and at its other end at an inner side of a housing cover 38. In the mounted state the spring is compressed so that the filter inlet element 14 is pressed to the left in Figure 1. As a result a sealing element is compressed, which sealing element is arranged on an annular tab 42 and is designed as an O-ring seal 40 in the embodiment illustrated.

For adjustment in a defined position the filter inlet element 14 e.g. has the cross section illustrated in Fig. 2a. Here, the cross section is not round, but has a flattening 44. The contour of the housing inlet is designed correspondingly, so that the filter element 10 can be inserted only in a defined position.

As an alternative the filter inlet element 14 may have a round cross section as illustrated in Fig. 2b. In this case the adjustment is effected via an in particular radially extending tab 46 that is inserted into a recess provided at the housing inlet 16.

In order to facilitate the insertion of the filter inlet element 14 into the housing inlet two guide elements 48 are provided in the embodiment illustrated (Figure 3). These extend in the longitudinal direction of the filter element 10 in particular in a region of the filter housing facing the housing inlet. Upon insertion of the filter element an outer side 50 of the filter element 10 is pushed upward in Figure 1 through the guide elements so that the filter inlet element 14 is arranged at the correct height just before it is inserted into the housing inlet 16. Preferably two guide elements 48 are provided that are each spaced from a center plane 42 of the filter element 10. Due to the curvature of the outer side 50 of the filter element 10, a lateral or horizontal adjustment is also effected.

In the region of the filter outlet element 24 or on a side of the filter element 10 facing the housing cover 38, two opposite retaining elements 54 are provided on the outer side of the substantially cylindrical filter outlet element 24 (Figure 4). The two retaining elements 54 shown in the embodiment illustrated are designed as wing-shaped tabs. These are tabs extending in the horizontal direction in the mounted state. On their outer side, the tabs have a thickening 56 that extends in the longitudinal direction and serves for a better adjustment.

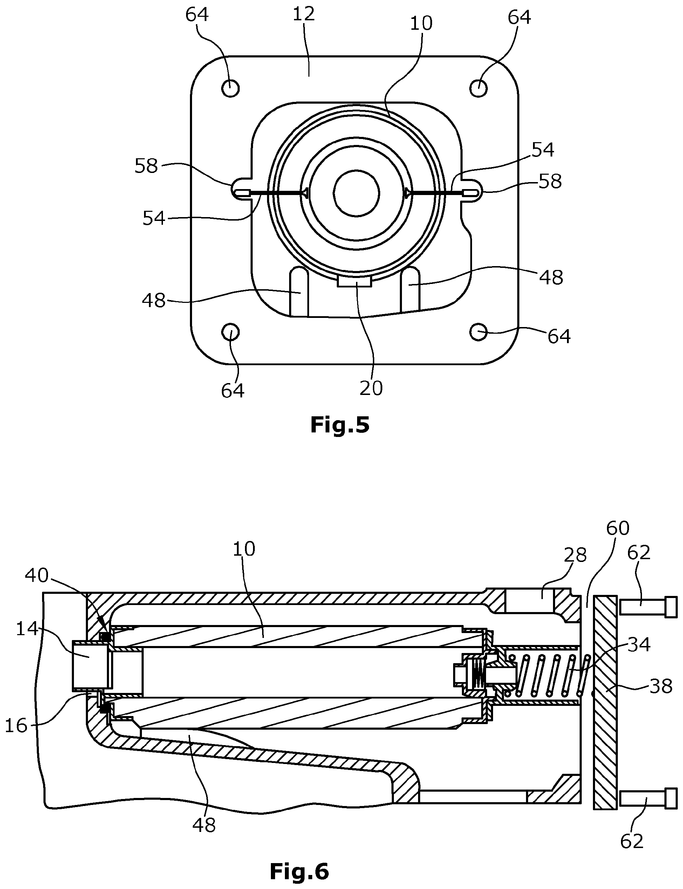

In the mounted state the retaining elements 54 (Figure 5) are arranged in preferably slot-shaped receiving elements 58.

For the mounting of the filter element 10, the same is inserted to the left into an insertion opening 60 (Figure 6). Owing to the two guide elements 48, an adjustment of the position of the filter inlet element 14 is effected relative to the housing inlet 16. Further, the right part of the filter element 10 in Figure 6 is adjusted by the wing-shaped tabs 54 (Figure 5). At first, the spring 34 is not tensioned. As such, no pressure has to be exerted on the filter outlet element 24 yet. In the next step the filter cover 38 is placed and fixed by means of four screws 62. Here, the screws 62 engage in the threads 64 provided in the filter housing (Figure 5) and are already slightly retained before the spring 34 is compressed. Tightening the screws 62 further causes a compression of the spring 34 and thereby causes the exertion of a retaining force also on the O-ring seal 40.

For dismantling, the four screws 62 merely have to be unscrewed, the housing cover 38 has to be removed and the filter element 10 has to be pulled out. Already when being pulled out the filter element can be enclosed in a plastic bag or the like so that the risk of lubricant dripping and thus of a contamination of the environment is avoided.

## Claims

1. Filter system for oil-sealed vacuum pumps, comprising:
a filter element (10) for filtering out lubricant from a lubricant-gas mixture, the filter element (10) having a filter inlet element (14) and a filter outlet element (24);
a housing (12) accommodating the filter element (10);
a housing inlet (16) accommodating the filter inlet element (14);
a retaining element (54) connected to the filter element (10) in the region of the filter outlet element (24); and a receiving element (58) provided in the filter housing (12) and cooperating with the retaining element (54),
the filter inlet element (14) and the housing inlet (16) are designed such that,
for adjustment, the filter inlet element (14) can be received by the housing inlet (16) in only one position, and wherein the filter system is designed such that the filter element (10) can be axially inserted and/or removed from the housing (12);
**characterised in that** the retaining element (54) has two wing-shaped tabs protruding into two slot-shaped recesses (58) of the receiving element.

2. Filter system of claim1, wherein the retaining element (54) and the receiving element (58) are designed such that, for adjustment, the retaining element (54) can be received by the receiving element (58) in only one position.

3. Filter system of claim 1 or 2, **characterized in that** the filter inlet element (14) and the housing inlet (16) have a round cross section (44) and/or a tab is provided that engages into a corresponding recess.

4. Filter system of one of claims 1 - 3, **characterized in that** the filter inlet element (14) has an annular tab (42), seen in cross section, for receiving an annular sealing element (40).

5. Filter system of claim 4 **characterized in that** in the region of the filter outlet element (24), a tensioning element (34) is provided for generating a retaining force on the sealing element (40).

6. Filter system of claim 5, **characterized in that** an insertion opening (60) of the filter housing (12) for the insertion of the filter element (10) is closed with a housing cover (38).

7. Filter system of claim 6, **characterized in that** the housing cover (38) is fixed on the filter housing (12) by fixing elements (62), wherein the tensioning element (34) is compressed by fixing the housing cover (38).

8. Filter system of one of claims 1 - 7, **characterized in that** the filter element (10) has a substantially cylindrical cross section, wherein a drip edge (20) is provided on a lower side.

9. Filter system of one of claims 1 - 8, **characterized in that** a pressure relief valve (32) is provided in the region of the filter outlet element (24).

10. Filter system of one of claims 1 - 9, **characterized in that** at least one guide element (48) is provided in the region of the housing inlet (18) to assist the insertion of the filter inlet element (14) into the housing inlet (16).

11. Filter system of claim 10, **characterized in that** two guide elements (48) are provided extending in the longitudinal direction of the filter element (10).

## Patentansprüche

1. Filtersystem für ölabgedichtete Vakuumpumpen, umfassend:
ein Filterelement (10) zum Ausfiltern von Schmiermittel aus einem Schmiermittel-GasGemisch, wobei das Filterelement (10) ein Filtereinlasselement (14) und ein Filterauslasselement (24) aufweist;
ein Gehäuse (12), das das Filterelement (10) aufnimmt;
einen Gehäuseeinlass (16), der das Filtereinlasselement (14) aufnimmt;
ein Halteelement (54), im Bereich des Filterauslasselements (24) verbunden mit dem Filterelement (10); und ein in dem Filtergehäuse (12) bereitgestelltes Aufnahmeelement (58), das mit dem Halteelement (54) zusammenwirkt,
wobei das Filtereinlasselement (14) und der Gehäuseeinlass (16) so gestaltet sind, dass, zur Einstellung, das Filtereinlasselement (14) von dem Gehäuseeinlass (16) in nur einer Position aufgenommen werden kann, und wobei das Filtersystem so gestaltet ist, dass das Filterelement (10) axial in das Gehäuse (12) eingesetzt und/oder aus ihm entfernt werden kann;
**dadurch gekennzeichnet, dass** das Halteelement (54) zwei flügelförmige Laschen aufweist, die in zwei schlitzförmige Ausnehmungen (58) des Aufnahmeelements vorstehen.

2. Filtersystem nach Anspruch 1, wobei das Halteelement (54) und das Aufnahmeelement (58) so gestaltet sind, dass, zur Einstellung, das Halteelement (54) in nur einer Position von dem Aufnahmeelement (58) aufgenommen werden kann.

3. Filtersystem nach Anspruch 1 oder 2, **dadurch gekennzeichnet, dass** das Filtereinlasselement (14) und der Gehäuseeinlass (16) einen runden Querschnitt (44) aufweisen und/oder eine Lasche bereitgestellt ist, die in eine entsprechende Ausnehmung eingreift.

4. Filtersystem nach einem der Ansprüche 1 bis 3, **dadurch gekennzeichnet, dass** das Filtereinlasselement (14) eine, im Querschnitt betrachtet, ringförmige Lasche (42) zum Aufnehmen eines ringförmigen Dichtungselements (40) aufweist.

5. Filtersystem nach Anspruch 4, **dadurch gekennzeichnet, dass** im Bereich des Filterauslasselements (24) ein Spannelement (34) zum Erzeugen einer Haltekraft an dem Dichtungselement (40) bereitgestellt ist.

6. Filtersystem nach Anspruch 5, **dadurch gekennzeichnet, dass** eine Einsetzöffnung (60) des Filtergehäuses (12) zum Einsetzen des Filterelements (10) mit einer Gehäuseabdeckung (38) verschlossen ist.

7. Filtersystem nach Anspruch 6, **dadurch gekennzeichnet, dass** die Gehäuseabdeckung (38) durch Befestigungselemente (62) an dem Filtergehäuse (12) befestigt ist, wobei das Spannelement (34) durch Befestigen der Gehäuseabdeckung (38) zusammengedrückt wird.

8. Filtersystem nach einem der Ansprüche 1 bis 7, **dadurch gekennzeichnet, dass** das Filterelement (10) einen im Wesentlichen zylindrischen Querschnitt aufweist, wobei auf einer Unterseite eine Abtropfkante (20) bereitgestellt ist.

9. Filtersystem nach einem der Ansprüche 1 bis 8, **dadurch gekennzeichnet, dass** im Bereich des Filterauslasselements (24) ein Überdruckventil (32) bereitgestellt ist.

10. Filtersystem nach einem der Ansprüche 1 bis 9, **dadurch gekennzeichnet, dass** im Bereich des Gehäuseeinlasses (18) zur Unterstützung des Einsetzens des Filtereinlasselements (14) in den Gehäuseeinlass (16) mindestens ein Führungselement (48) bereitgestellt ist.

11. Filtersystem nach Anspruch 10, **dadurch gekennzeichnet, dass** zwei Führungselemente (48) bereitgestellt sind, die sich in der Längsrichtung des Filterelements (10) erstrecken.

## Revendications

1. Système filtrant pour des pompes à vide à bain d'huile, comprenant :
un élément filtrant (10) pour filtrer le lubrifiant d'un mélange de lubrifiant-gaz, l'élément filtrant (10) ayant un élément d'entrée de filtre (14) et un élément de sortie de filtre (24) ;
un boîtier (12) logeant l'élément filtrant (10) ;
une entrée de boîtier (16) logeant l'élément d'entrée de filtre (14) ;
un élément de retenue (54) raccordé à l'élément filtrant (10) dans la région de l'élément de sortie de filtre (24) ; et un élément de réception (58) prévu dans le boîtier de filtre (12) et coopérant avec l'élément de retenue (54),
l'élément d'entrée de filtre (14) et l'entrée de boîtier (16) sont conçus de sorte que, pour le réglage, l'élément d'entrée de filtre (14) peut être reçu par l'entrée de boîtier (16) dans une seule position, et dans lequel le système de filtre est conçu de sorte que l'élément de filtre (10) peut être axialement inséré et/ou retiré du boîtier (12) ;
**caractérisé en ce que** l'élément de retenue (54) a deux languettes en forme d'aile faisant saillie dans deux évidements en forme de fente (58) de l'élément de réception.

2. Système filtrant selon la revendication 1, dans lequel l'élément de retenue (54) et l'élément de réception (58) sont conçus de sorte que, pour le réglage, l'élément de retenue (54) peut être reçu par l'élément de réception (58) dans une seule position.

3. Système filtrant selon la revendication 1 ou 2, **caractérisé en ce que** l'élément d'entrée de filtre (14) et l'entrée de boîtier (16) ont une section transversale ronde (44) et/ou une languette est prévue, laquelle se met en prise dans un évidement correspondant.

4. Système filtrant selon l'une des revendications 1 à 3, **caractérisé en ce que** l'élément d'entrée de filtre (14) a une languette annulaire (42), observée en coupe, pour recevoir un élément d'étanchéité annulaire (40).

5. Système filtrant selon la revendication 4, **caractérisé en ce que**, dans la région de l'élément de sortie de filtre (24), un élément de tension (34) est prévu pour générer une force de retenue sur l'élément d'étanchéité (40).

6. Système filtrant selon la revendication 5, **caractérisé en ce qu'**une ouverture d'insertion (60) du boîtier de filtre (12) pour l'insertion de l'élément de filtre (10) est fermée avec un couvercle de boîtier (38).

7. Système filtrant selon la revendication 6, **caractérisé en ce que** le couvercle de boîtier (38) est fixé sur le boîtier de filtre (12) par des éléments de fixation (62), dans lequel l'élément de tension (34) est comprimé en fixant le couvercle de boîtier (38).

8. Système filtrant selon l'une des revendications 1 à 7, **caractérisé en ce que** l'élément filtrant (10) a une section transversale sensiblement cylindrique, dans lequel un bord d'égouttement (20) est prévu sur un côté inférieur.

9. Système filtrant selon l'une des revendications 1 à 8, **caractérisé en ce qu'**une soupape de surpression (32) est prévue dans la région de l'élément de sortie de filtre (24).

10. Système filtrant selon l'une des revendications 1 à 9, **caractérisé en ce qu'**au moins un élément de guidage (48) est prévu dans la région de l'entrée de boîtier (18) pour aider l'insertion de l'élément d'entrée de filtre (14) dans l'entrée de boîtier (16).

11. Système filtrant selon la revendication 10, **caractérisé en ce que** deux éléments de guidage (48) sont prévus en s'étendant dans la direction longitudinale de l'élément de filtre (10).
